(19) Europäisches Patentamt
European Patent Office
Office européen des brevets

(11) **EP 3 780 177 A1**

(12) **EUROPEAN PATENT APPLICATION**
published in accordance with Art. 153(4) EPC

(43) Date of publication:
**17.02.2021 Bulletin 2021/07**

(21) Application number: **19780995.7**

(22) Date of filing: **20.02.2019**

(51) Int Cl.:
**H01M 4/525** [(2010.01)]      **C01G 53/00** [(2006.01)]

(86) International application number:
**PCT/JP2019/006378**

(87) International publication number:
**WO 2019/193857 (10.10.2019 Gazette 2019/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.04.2018 JP 2018071818**

(71) Applicant: **Panasonic Intellectual Property Management Co., Ltd.**
**Osaka-shi, Osaka 540-6207 (JP)**

(72) Inventors:
• **SAITOU Motoharu**
 **Osaka-shi,**
 **Osaka 540-6207 (JP)**

• **OGASAWARA Takeshi**
 **Osaka-shi,**
 **Osaka 540-6207 (JP)**
• **AOKI Yoshinori**
 **Osaka-shi,**
 **Osaka 540-6207 (JP)**
• **TSUJI Tomoki**
 **Osaka-shi,**
 **Osaka 540-6207 (JP)**

(74) Representative: **Vigand, Philippe et al**
**Novagraaf International SA**
**Chemin de l'Echo 3**
**1213 Onex - Genève (CH)**

(54) **NON-AQUEOUS ELECTROLYTE SECONDARY BATTERY**

(57)     A non-aqueous electrolyte secondary battery according to one embodiment includes a positive electrode, a negative electrode, and a non-aqueous electrolyte. The positive electrode has lithium composite oxide particles containing 80 mol% or more but less than 100 mol% of Ni with respect to the total number of moles of metal elements excluding Li. The lithium composite oxide particles include particles (32) having a stair-like structure in which three or more layers of a flat surface (30) having a periphery length of 1 $\mu$m or more are layered.

Figure 3

EP 3 780 177 A1

## Description

TECHNICAL FIELD

The present invention relates to techniques for a non-aqueous electrolyte secondary battery.

BACKGROUND ART

Recently, a non-aqueous electrolyte secondary battery comprising a positive electrode, a negative electrode and a non-aqueous electrolyte, in which charge/discharge is performed by movement of lithium ions and the like between the positive electrode and the negative electrode, has been used widely as a high-output and high-energy density secondary battery.

The followings are, for example, known as positive electrode active materials for use in positive electrodes of non-aqueous electrolyte secondary batteries.

For example, Patent Literature 1 discloses a positive electrode active material represented by compositional formula: $Li_xNi_{1-y}M_yO_2+_\alpha$ (wherein M is one or more selected from the group consisting of Sc, Ti, V, Cr, Mn, Fe, Co, Cu, Zn, Ga, Ge, Al, Bi, Sn, Mg, Ca, B and Zr, and $0.9 \le x \le 1.2$, $0 < y \le 0.7$ and $\alpha \ge 0$.), in which the average crystal particle size is 1.2 to 5.0 $\mu$m in observation of cross sections of particles with a SIM (scanning ion microscope) image.

For example, Patent Literature 2 discloses a positive electrode active material represented by compositional formula: $Li_xNi_{1-y}M_yO_{2+\alpha}$ (wherein M is one or more selected from the group consisting of Sc, Ti, V, Cr, Mn, Fe, Co, Cu, Zn, Ga, Ge, Bi, Sn, Mg, Ca, B and Zr, and $0.9 \le x \le 1.2$, $0 < y \le 0.7$ and $\alpha > 0.1$.), in which the average particle size D50 of primary particles is 1.6 to 2.3 $\mu$m, the amount of alkali on the surface of particles, as measured by two-stage neutralization titration, is 1.2% by mass or less, and with respect to the amount of alkali on the surface of particles, A/B is 1 or less, where the amount of lithium hydroxide is designated as A% by mass and the amount of lithium carbonate is designated as B% by mass.

CITATION LIST

PATENT LITERATURES

PATENT LITERATURE 1: Japanese Patent No. 5876739
PATENT LITERATURE 2: Japanese Patent No. 6030546

SUMMARY

Meanwhile, in a case where a lithium composite oxide in which the proportion of Ni relative to the total number of moles of metal element(s) except for Li is 80 mol% or more and less than 100 mol% is used as a positive electrode active material, a problem is that, although an increase in capacity of a non-aqueous electrolyte secondary battery may be achieved, charge/discharge cycle characteristics are deteriorated.

It is an advantage of the present disclosure to suppress deterioration in charge/discharge cycle characteristics in a non-aqueous electrolyte secondary battery using a lithium composite oxide in which the proportion of Ni relative to the total number of moles of metal element(s) except for Li is 80 mol% or more and less than 100 mol%.

A non-aqueous electrolyte secondary battery according to one aspect of the present disclosure comprises a positive electrode, a negative electrode and a non-aqueous electrolyte, wherein the positive electrode has lithium composite oxide particles including 80 mol% or more and less than 100 mol% of Ni relative to the total number of moles of metal element(s) except for Li, and the lithium composite oxide particles include particles each having a stepped structure obtained by stacking three or more flat surfaces having outer edges each having a length of 1 $\mu$m or more.

According to one aspect of the present disclosure, deterioration in charge/discharge cycle characteristics can be suppressed in a non-aqueous electrolyte secondary battery using a lithium composite oxide in which the proportion of Ni relative to the total number of moles of metal element(s) except for Li is 80 mol% or more and less than 100 mol%.

BRIEF DESCRIPTION OF DRAWINGS

FIG. 1 is a sectional view of a non-aqueous electrolyte secondary battery according to one example of an embodiment.

FIG. 2 is a schematic view illustrating one example of shapes of lithium composite oxide particles.
FIG. 3 is a reflection electron composition image (3000x) of SEM of a positive electrode plate including Ni-containing lithium composite oxide particles obtained in Example 1.

DESCRIPTION OF EMBODIMENTS

The present inventors have made intensive studies, and as a result, have found that deterioration in charge/discharge cycle characteristics of a non-aqueous electrolyte secondary battery is suppressed by using particles each having a specific shape, specifically, particles each having a stepped structure obtained by stacking three or more flat surfaces having outer edges each having a length of 1 $\mu$m or more, for lithium composite oxide particles including 80 mol% or more and less than 100 mol% of Ni relative to the total number of moles of metal element(s) except for Li.

Hereinafter, one example of a non-aqueous electrolyte secondary battery according to one aspect of the present disclosure will be described.

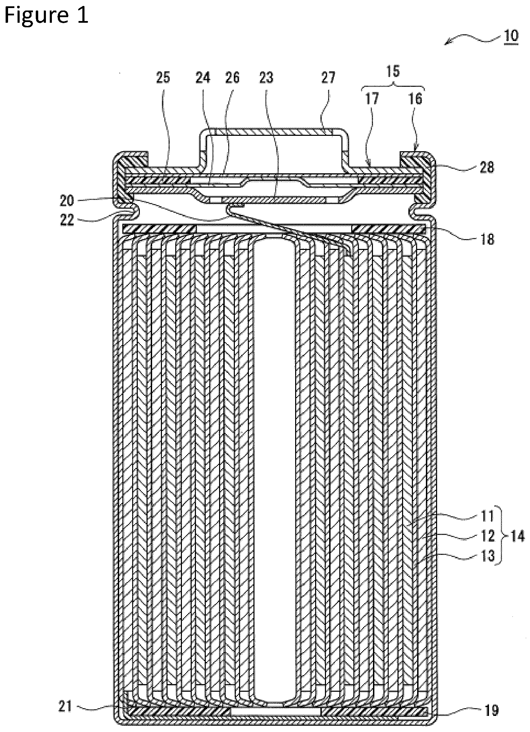

FIG. 1 is a sectional view of a non-aqueous electrolyte secondary battery according to one example of an embodiment. A non-aqueous electrolyte secondary battery 10 illustrated in FIG. 1 comprises a wound electrode assembly 14 formed by winding a positive electrode 11 and a negative electrode 12 with a separator 13 being interposed therebetween, a non-aqueous electrolyte, insulating plates 18 and 19 disposed on and under the electrode assembly 14, respectively, and a battery case 15 housing such members. The battery case 15 is configured from a bottomed circular cylindrical case body 16 and a sealing assembly 17 that closes an opening in the case body 16. Other form of an electrode assembly, such as a stacked electrode assembly formed by alternately stacking a positive electrode and a negative electrode with a separator being interposed therebetween, may be applied instead of the wound electrode assembly 14. Examples of the battery case 15 can include respective metal cases of cylindrical, square, coin, and button shapes, and a resin case (laminate battery) formed by laminating a resin sheet.

The case body 16 is, for example, a bottomed circular cylindrical metallic container. A gasket 28 is provided between the case body 16 and the sealing assembly 17, and sealability in the battery is ensured. The case body 16 has, for example, a projecting portion 22 in which a side surface portion is partially projected and which supports the sealing assembly 17. The projecting portion 22 is preferably formed annularly along with the circumferential direction of the case body 16, and supports the sealing assembly 17 on the upper surface thereof.

The sealing assembly 17 has a structure in which a filter 23, a lower vent member 24, an insulating member 25, an upper vent member 26 and a cap 27 are stacked closer to the electrode assembly 14 in the listed order. The respective members constituting the sealing assembly 17 each have, for example, a disc or ring shape, and such respective members except for the insulating member 25 are mutually electrically connected. The lower vent member 24 and the upper vent member 26 are mutually connected at the respective central portions, and the insulating member 25 is interposed between the respective peripheries of the vent members. If the internal pressure of the non-aqueous electrolyte secondary battery 10 is increased due to heat generation by internal short-circuit or the like, for example, the lower vent member 24 is deformed and fractured so as to push the upper vent member 26 toward the cap 27, thereby causing the current pathway between the lower vent member 24 and the upper vent member 26 to be blocked. If the internal pressure is further increased, the upper vent member 26 is fractured to cause gas to be discharged through an opening in the cap 27.

In the non-aqueous electrolyte secondary battery 10 illustrated in FIG. 1, a positive electrode lead 20 attached to the positive electrode 11 extends toward the sealing assembly 17 through a through-hole of the insulating plate 18, and a negative electrode lead 21 attached to the negative electrode 12 extends toward the bottom of the case body 16 through the outside of the insulating plate 19. The positive electrode lead 20 is connected to the lower surface of the filter 23, as the bottom plate of the sealing assembly 17, by welding or the like, and the cap 27 which is a top panel of the sealing assembly 17 electrically connected to the filter 23 serves as a positive electrode terminal. The negative electrode lead 21 is connected to the inner surface of the bottom of the case body 16, by welding or the like, and the case body 16 serves as a negative electrode terminal.

Hereinafter, the positive electrode 11, the negative electrode 12, the non-aqueous electrolyte and the separator 13 will be described in detail.

<Positive Electrode>

The positive electrode 11 is configured from, for example, a positive electrode current collector such as metal foil and a positive electrode active material layer formed on the positive electrode current collector. The positive electrode current collector which can be here used is, for example, any foil of a metal which is stable in the potential range of the positive electrode, such as aluminum, or any film obtained by placing such a metal on a surface layer. The positive electrode active material layer includes, for example, a positive electrode active material, a binder, a conductive agent, and the like.

The positive electrode 11 is obtained by, for example, applying a positive electrode mixture slurry including a positive electrode active material, a binder, a conductive agent, and the like onto the positive electrode current collector and drying the resultant, thereby forming a positive electrode active material layer on the positive electrode current collector, and rolling the positive electrode active material layer.

The positive electrode active material includes lithium composite oxide particles including 80 mol% or more and less than 100 mol% of Ni relative to the total number of moles of metal element(s) except for Li. The lithium composite oxide particles may include any element(s) other than Ni and Li, and examples thereof include at least one element selected from the group consisting of Al, Co, Mn, Ti, Nb, Si, Mo, Zr, V, Fe, Mg, Cr, Cu, Sn, Ta, W, Na, K, Ba, Sr, Bi, Be, Zn, Ca and B. In particular, at least one element selected from the group consisting of Al and Co is preferable from the viewpoint of, for example, suppression of deterioration in charge/discharge cycle characteristics.

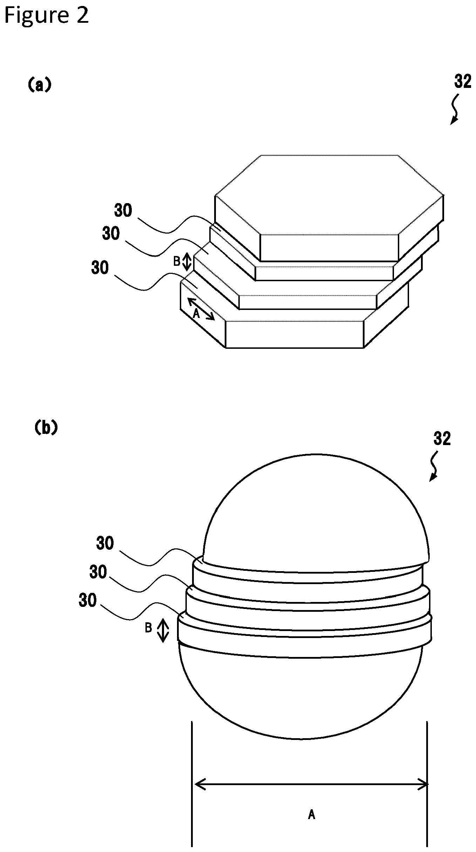

FIGS. 2(a) and (b) are each a schematic view illustrating one example of the shapes of the lithium composite oxide particles. The lithium composite oxide particles including 80 mol% or more and less than 100 mol% of Ni relative to the total number of moles of metal element(s) except for Li include particle 32 having a stepped structure obtained by three or more flat surfaces 30 having outer edges each having a length (A) of 1 $\mu$m or more, as illustrated in FIGS. 2(a) and (b). The lithium composite oxide particles including 80 mol% or more and less than 100 mol% of Ni relative to the total number of moles of metal element(s) except for Li may include particles having any other known shape, in addition to particles 32.

The length (A) of the outer edge of the flat surface 30 may be 1 $\mu$m or more, and is, for example, preferably 2 $\mu$m or more. The upper limit of the length (A) of the outer edge is, for example, 15 $\mu$m or less, depending on the particle sizes of particles. The shape of the outer edge of the flat surface 30 is a polygonal shape, a curved shape, or the like, and is not particularly limited. The number of the flat surfaces 30 stacked may be three or more, and is preferably five or more from the viewpoint of more suppression of deterioration in charge/discharge cycle characteristics. The upper limit of the number of the flat surfaces 30 stacked is, for example, 15 or less depending on the particle sizes of particles. The difference in level in the stepped structure (height (B) from one flat surface 30 to the next flat surface 30) is, for example, preferably in the range of 0.01 $\mu$m or more and 1 $\mu$m or less, more preferably in the range of 0.03 $\mu$m or more and 0.2 $\mu$m or less from the viewpoint of more suppression of deterioration in charge/discharge cycle characteristics.

The proportion of particles 32 is preferably 3% or more, more preferably 5% or more, relative to the entire lithium composite oxide particles including 80 mol% or more and less than 100 mol% of Ni relative to the total number of moles of metal element(s) except for Li. In a case where the proportion of particles 32 satisfies the range, deterioration in charge/discharge cycle characteristics is further suppressed, as compared with a case where the range is not satisfied.

The proportion of particles 32 is determined by the following method. An electron microscope is used to observe randomly twenty fields of view at a magnification which enables the surfaces of the lithium composite oxide particles to be sufficiently observed. The number (M) of all particles and the number (N) of particles 32, as observed in such fields of view, are measured. Such measurements are performed in twenty fields of view, and the ratio (N/M) of the number (N) of particles 32 to the number (M) of all particles is determined. The average value of the resulting values is defined as the proportion of particles 32.

The particle size of particles 32 is, for example, preferably 1.5 $\mu$m or more, more preferably 3 $\mu$m or more in terms of charge/discharge cycle characteristics. The upper limit of the particle size of particle 32 is, for example, preferably 20 $\mu$m or less, more preferably 15 $\mu$m or less. A too large particle size of particle 32 may cause deterioration in battery capacity. The particle size of particle 32 is obtained by specifying randomly twenty particles 32 with an electron microscope, subjecting the particles 32 specified, to image analysis, to thereby determine the longest sizes of the twenty particles 32, and defining the average value thereof as the particle size of particle 32.

The particle breakage strength of particles 32 is, for example, preferably 230 MPa or more, more preferably 300 MPa or more. In a case where the particle breakage strength of particles 32 satisfies the range, cracking of particles 32 due to charge/discharge may be suppressed and deterioration in charge/discharge cycle characteristics may be further suppressed, as compared with a case where the range is not satisfied. The upper limit value of the particle breakage strength of particles 32 is not particularly limited, and is, for example, preferably 1000 MPa or less. The particle breakage strength is measured by the method prescribed in JIS-R1639-5. It is noted that $\alpha$ (dimensionless number changed depending on the position in granules), which is defined as 2.48 in JIS-R1639-5, is defined as 2.8 in the present application.

The content of the lithium composite oxide particles including 80 mol% or more and less than 100 mol% of Ni relative to the total number of moles of metal element(s) except for Li is preferably 90% by mass or more, preferably 99% by mass or more relative to the total mass of the positive electrode active material from the viewpoint of, for example, an enhancement in battery capacity.

The positive electrode active material may include any lithium composite oxide particles other than the lithium composite oxide particles including 80 mol% or more and less than 100 mol% of Ni relative to the total number of moles of metal element(s) except for Li. Examples of such any other lithium composite oxide particles include lithium composite oxide particles in which the proportion of Ni is less than 80 mol%.

The lithium composite oxide particles including 80 mol% or more and less than 100 mol% of Ni relative to the total number of moles of metal element(s) except for Li are obtained by mixing a Ni-containing oxide and a Li compound, and firing the mixture. Particles 32 each having a stepped structure obtained by stacking three or more flat surfaces 30 having outer edges each having a length (A) of 1 μm or more are obtained by, for example, adding an alkali or alkali earth metal compound having a melting point of 600°C or less, such as potassium hydroxide, to a mixture of a Ni-containing oxide and a Li compound, and firing the mixture at two stages. The conditions of such two-stage firing are appropriately set depending on the composition of the Ni-containing oxide, the mixing ratio between the Ni-containing oxide and the Li compound, the presence of addition of potassium hydroxide and/or the like, and the like, and, for example, the firing temperature at the second stage is preferably less than the firing temperature at the first stage. The firing temperature at the first stage is, for example, in the range from 700°C to 1000°C, and the firing temperature at the second stage is, for example, in the range from 600°C to 800°C. The firing times at the first stage and the second stage are each, for example, 1 to 10 hours.

Hereinafter, other material(s) included in the positive electrode active material layer will be described.

Examples of the conductive agent included in the positive electrode active material layer include carbon powders of carbon black, acetylene black, ketchen black, and graphite. These may be used singly or in combinations of two or more kinds thereof.

Examples of the binder included in the positive electrode active material layer include a fluoropolymer and a rubber-based polymer. Examples of the fluoropolymer include polytetrafluoroethylene (PTFE), polyvinylidene fluoride (PVdF), or any modified product thereof, and examples of the rubber-based polymer include an ethylene-propylene-isoprene copolymer and an ethylene-propylene-butadiene copolymer. These may be used singly or in combinations of two or more kinds thereof.

<Negative Electrode>

The negative electrode 12 comprises, for example, a negative electrode current collector such as metal foil and a negative electrode active material layer formed on the negative electrode current collector. The negative electrode current collector which can be here used is, for example, any foil of a metal which is stable in the potential range of the negative electrode, such as copper, or any film obtained by placing such a metal on a surface layer. The negative electrode active material layer includes, for example, a negative electrode active material, a binder, a thickener, and the like.

The negative electrode 12 is obtained by, for example, applying a negative electrode mixture slurry including a negative electrode active material, a thickener, and a binder onto a negative electrode current collector and drying the resultant, thereby forming a negative electrode active material layer on the negative electrode current collector, and rolling the negative electrode active material layer.

The negative electrode active material included in the negative electrode active material layer is not particularly limited as long as the material can occlude and release lithium ions, and examples thereof include a carbon material, a metal which can form an alloy together with lithium, or an alloy compound including such a metal. The carbon material which can be here used is, for example, any of graphites such as natural graphite, non-graphitizable carbon and artificial graphite, and cokes, and examples of the alloy compound include any compound including at least one metal which can form an alloy together with lithium. Such an element which can form an alloy together with lithium is preferably silicon or tin, and silicon oxide, tin oxide or the like obtained by binding such an element to oxygen can also be used. A mixed product of the carbon material with a silicon or tin compound can be used. Any other than the above can also be used where the charge/discharge potential to metallic lithium such as lithium titanate is higher than that of the carbon material or the like.

The binder included in the negative electrode active material layer, which can be here used, is for example, a fluoropolymer or a rubber-based polymer, as in the case of the positive electrode, and a styrene-butadiene copolymer (SBR) or a modified product thereof may also be used. The binder included in the negative electrode active material layer, which can be here used, is for example, a fluororesin, PAN, a polyimide-based resin, an acrylic resin, or a polyolefin-based resin, as in the case of the positive electrode. In a case where the negative electrode mixture slurry is prepared by use of an aqueous solvent, styrene-butadiene rubber (SBR), CMC or a salt thereof, polyacrylic acid (PAA) or a salt thereof (PAA-Na, PAA-K or the like, alternatively, a partially neutralized salt may be adopted), polyvinyl alcohol (PVA), or the like is preferably used.

Examples of the thickener included in the negative electrode active material layer include carboxymethylcellulose (CMC) and polyethylene oxide (PEO). These may be used singly or in combinations of two or more kinds thereof.

<Non-Aqueous Electrolyte>

The non-aqueous electrolyte includes a non-aqueous solvent and an electrolyte salt dissolved in the non-aqueous solvent. The non-aqueous electrolyte is not limited to a liquid electrolyte (non-aqueous electrolytic solution), and may be a solid electrolyte using a gel-like polymer or the like. The non-aqueous solvent which can be used is, for example, any of esters, ethers, nitriles such as acetonitrile, amides such as dimethylformamide, and a mixed solvent of two or more kinds thereof. The non-aqueous solvent may contain a halogen-substituted product obtained by at least partially replacing hydrogen in such a solvent with a halogen atom such as fluorine.

Examples of the esters include cyclic carbonates such as ethylene carbonate (EC), propylene carbonate (PC) and butylene carbonate, linear carbonates such as dimethyl carbonate (DMC), ethyl methyl carbonate (EMC), diethyl carbonate (DEC), methyl propyl carbonate, ethyl propyl carbonate and methyl isopropyl carbonate, cyclic carboxylates such as γ-butyrolactone (GBL) and γ-valerolactone (GVL), and linear carboxylates such as methyl acetate, ethyl acetate, propyl acetate, methyl propionate (MP), ethyl propionate and γ-butyrolactone.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol and crown ether, and linear ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether and tetraethylene glycol dimethyl ether.

Any of a fluorinated cyclic carbonate such as fluoroethylene carbonate (FEC), a fluorinated linear carbonate, and a fluorinated linear carboxylate such as methyl fluoropropionate (FMP) is preferably used as the halogen-substituted product.

The electrolyte salt is preferably a lithium salt. Examples of the lithium salt include $LiBF_4$, $LiClO_4$, $LiPF_6$, $LiAsF_6$, $LiSbF_6$, $LiAlCl_4$, LiSCN, $LiCF_3SO_3$, $LiCF_3CO_2$, $Li(P(C_2O_4)F_4)$, $LiPF_{6-x}(C_nF_{2n+1})_x$ (1 < x < 6 and n is 1 or 2), $LiB_{10}Cl_{10}$, LiCl, LiBr, LiI, lithium chloroborane, lithium lower aliphatic carboxylate, borates such as $Li_2B_4O_7$ and $Li(B(C_2O_4)F_2)$, and imide salts such as $LiN(SO_2CF_3)_2$, $LiN(C_1F_{21+1}SO_2)(C_mF_{2m+1}SO_2)$ {1 and m are each an integer of 0 or more}. Such lithium salts may be used singly or in combinations of two or more kinds thereof. In particular, $LiPF_6$ is preferably used from the viewpoints of ion conductivity, electrochemical stability, and the like. The concentration of the lithium salt is preferably 0.8 to 1.8 mol per liter of the non-aqueous solvent.

<Separator>

The separator 13 here used is, for example, a porous sheet having ion permeability and insulating properties. Examples of the porous sheet include a microporous thin film, a woven cloth, and an unwoven cloth. The material of the separator is suitably an olefin-based resin such as polyethylene or polypropylene, cellulose, or the like.

EXAMPLES

Hereinafter, the present invention will be further described with reference to Examples, but the present invention is not intended to be limited to such Examples.

<Example 1>

[Production of Ni-Containing Lithium Composite Oxide Particles]

A composite hydroxide represented by $[Ni_{0.88}CO_{0.09}Al_{0.03}](OH)_2$, obtained according to a co-precipitation method, was fired at 500°C for 10 hours, thereby obtaining a composite oxide containing Ni, Co and Al. The average particle size (D50) of the composite oxide was 12 μm. Next, LiOH and the composite oxide containing Ni, Co and Al were mixed so that the molar ratio of Li and the total amount of Ni, Co and Al was 1.03:1, and KOH was then added in an amount of 10% by mass relative to the mixture. The mixture was fired in a 90% oxygen gas flow at 750°C for 40 hours, and impurities were removed by washing with water, thereby obtaining Ni-containing lithium composite oxide particles.

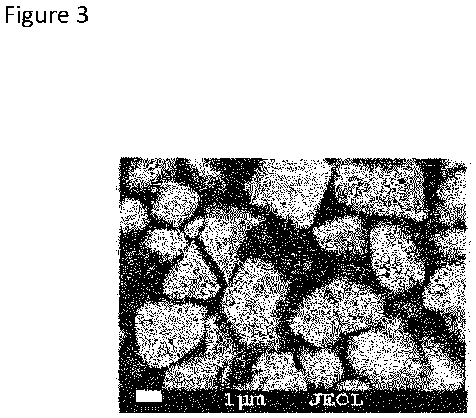

FIG. 3 is a reflection electron composition image (3000x) of SEM of a positive electrode plate including Ni-containing lithium composite oxide particles obtained in Example 1. The Ni-containing lithium composite oxide particles obtained in Example 1 included particles each having a stepped structure obtained by stacking three or more flat surfaces whose outer peripheries each had a length of 1 μm or more, as illustrated in FIG. 3. The proportion of the particles each having a stepped structure was 90% relative to the entire Ni-containing lithium composite oxide particles obtained in Example 1. The measurement methods are as described above.

<Comparative Example 1>

Ni-containing lithium composite oxide particles were obtained in the same manner as in Example 1 except that no KOH was added. The Ni-containing lithium composite oxide particles obtained in Comparative Example 1 was confirmed with an electron microscope, and particles each having a stepped structure, as in Example 1, were not confirmed.

<Example 2>

A composite hydroxide represented by $[Ni_{0.82}CO_{0.15}Al_{0.03}](OH)_2$, obtained according to a co-precipitation method, was fired at 500°C for 10 hours, thereby obtaining a composite oxide containing Ni, Co and Al. The average particle size (D50) of the composite oxide was 5 $\mu$m. Next, LiOH and the composite oxide containing Ni, Co and Al were mixed so that the molar ratio of Li and the total amount of Ni, Co and Al was 1.05:1. The mixture was fired in a 90% oxygen gas flow at 890°C for 2.5 hours and then at 760°C for 7.5 hours, the resulting fired product was pulverized by a jet mill, and impurities were then removed by washing with water, thereby obtaining Ni-containing lithium composite oxide particles.
The Ni-containing lithium composite oxide particles obtained in Example 2 were confirmed with an electron microscope, and thus particles each having a stepped structure obtained by stacking three or more flat surfaces whose outer peripheries each had a length of 1 $\mu$m or more were confirmed. The proportion of the particles each having a stepped structure was 6% relative to the entire Ni-containing lithium composite oxide particles obtained in Example 2.

<Comparative Example 2>

Ni-containing lithium composite oxide particles were obtained in the same manner as in Example 2 except that no step of firing at 890°C was included. The Ni-containing lithium composite oxide particles obtained in Comparative Example 2 were confirmed with an electron microscope, and particles each having a stepped structure, as in Example 1, were not confirmed.

[Production of Positive Electrode]

After 100% by mass of the Ni-containing lithium composite oxide particles of Example 1 as a positive electrode active material, 1% by mass of acetylene black as a conductive agent, and 0.9% by mass of polyvinylidene fluoride as a binder were mixed, a proper amount of N-methyl-2-pyrrolidone was added, thereby preparing a positive electrode mixture slurry. Next, the positive electrode mixture slurry was applied to each of both surfaces of a positive electrode current collector made of aluminum, having a thickness of 15 $\mu$m, and a coating film was rolled, thereby forming a positive electrode active material layer having a thickness of 70 $\mu$m, on each of both surfaces of the positive electrode current collector. The resultant was adopted as a positive electrode of Example 1. The same manner was conducted to produce each positive electrode also in other Examples and Comparative Examples.

[Production of Negative Electrode]

After 100% by mass of graphite as a negative electrode active material and 1% by mass of a styrene-butadiene copolymer (SBR) as a binder were mixed, a proper amount of water was added, thereby preparing a negative electrode mixture slurry. Next, the negative electrode mixture slurry was applied to each of both surfaces of a negative electrode current collector made of copper, having a thickness of 10 $\mu$m, and a coating film was rolled, thereby forming a negative electrode active material layer having a thickness of 100 $\mu$m, on each of both surfaces of the negative electrode current collector. The resultant was adopted as a negative electrode.

[Preparation of Electrolytic Solution]

Lithium hexafluorophosphate ($LiPF_6$) was dissolved in a mixed solvent of fluorinated ethylene carbonate (FEC), ethyl methyl carbonate (EMC) and dimethyl carbonate (DMC) mixed at a volume ratio of 15:45:40 so that the concentration was 1.3 mol/L, and thus an electrolytic solution was prepared.

[Production of Non-Aqueous Electrolyte Secondary Battery]

The positive electrode and the negative electrode of Example 1 were cut to respective predetermined dimensions, respective electrode tabs were attached thereto, a separator was then interposed between these electrodes, and the resultant was wound, thereby producing a wound electrode assembly. The electrode assembly, where respective insulating plates were disposed thereon and thereunder, was housed in a Ni-plated case body (diameter 18 mm, height 65 mm) made of stainless steel, and a negative electrode tab was welded to the bottom of the case body and a positive electrode tab was welded to a sealing assembly. The electrolytic solution was injected into the case body and the case body was then sealed by the sealing assembly, thereby producing a non-aqueous electrolyte secondary battery. The same manner was conducted to produce each non-aqueous electrolyte secondary battery also in other Examples and Comparative Examples.

[Measurement of Capacity Retention in Charge/Discharge Cycle Characteristics]

(1) After each of the non-aqueous electrolyte secondary batteries of Example 1 and Comparative Example 1 was subjected to constant current charge at a constant current of 0.5 C under an environmental temperature of 25°C until the battery voltage reached 4.15 V, the non-aqueous electrolyte secondary battery was subjected to constant current discharge at a constant current of 0.5 C until the battery voltage reached 3.0 V. The charge/discharge cycle was performed for 750 cycles, and the capacity retention in the charge/discharge cycle of each of the non-aqueous electrolyte secondary batteries of Example 1 and Comparative Example 1 was determined according to the following equation.

(2) After each of the non-aqueous electrolyte secondary batteries of Example 2 and Comparative Example 2 was subjected to constant current charge at a constant current of 0.5 C under an environmental temperature of 25°C until the battery voltage reached 4.10 V, the non-aqueous electrolyte secondary battery was subjected to constant current discharge at a constant current of 0.5 C until the battery voltage reached 3.0 V. The charge/discharge cycle was performed for 750 cycles, and the capacity retention in the charge/discharge cycle of each of the non-aqueous electrolyte secondary batteries of Example 2 and Comparative Example 2 was determined according to the following expression.

$$\text{Capacity retention} = (\text{Discharge capacity at } 750^{\text{th}} \text{ cycle}/\text{Discharge capacity at } 1^{\text{st}}$$

$$\text{cycle}) \times 100$$

The capacity retention of the non-aqueous electrolyte secondary battery of Example 1 was 86%, and the capacity retention of the non-aqueous electrolyte secondary battery of Comparative Example 1 was 80%. The capacity retention of the non-aqueous electrolyte secondary battery of Example 2 was 93%, and the capacity retention of the non-aqueous electrolyte secondary battery of Comparative Example 2 was 90%. That is, Ni-containing lithium composite oxide particles including particles each having a stepped structure obtained by stacking three or more flat surfaces having outer edges each having a length of 1 μm or more can be used in a positive electrode active material, thereby allowing deterioration in charge/discharge cycle characteristics of a non-aqueous electrolyte secondary battery to be suppressed.

REFERENCE SIGNS LIST

| | |
|---|---|
| 10 | non-aqueous electrolyte secondary battery |
| 11 | positive electrode |
| 12 | negative electrode |
| 13 | separator |
| 14 | electrode assembly |
| 15 | battery case |
| 16 | case body |
| 17 | sealing assembly |
| 18, 19 | insulating plate |
| 20 | positive electrode lead |
| 21 | negative electrode lead |
| 22 | projecting portion |
| 23 | filter |
| 24 | lower vent member |

25      insulating member
26      upper vent member
27      cap
28      gasket.

**Claims**

1. A non-aqueous electrolyte secondary battery, comprising:

   a positive electrode;
   a negative electrode; and
   a non-aqueous electrolyte, wherein
   the positive electrode has lithium composite oxide particles including 80 mol% or more and less than 100 mol% of Ni relative to the total number of moles of metal element(s) except for Li, and
   the lithium composite oxide particles include particles each having a stepped structure obtained by stacking three or more flat surfaces having outer edges each having a length of 1 $\mu$m or more.

2. The non-aqueous electrolyte secondary battery according to claim 1, wherein a difference in level in the stepped structure is 0.01 $\mu$m or more and 1 $\mu$m or less.

3. The non-aqueous electrolyte secondary battery according to claim 1 or 2, wherein a proportion of the particles each having the stepped structure is 3% or more relative to the entire lithium composite oxide particles.

4. The non-aqueous electrolyte secondary battery according to any one of claims 1 to 3, wherein a particle breakage strength of the particles each having the stepped structure is 230 MPa or more.

Figure 1

# Figure 2

(a)

32

30
30
30

B

A

(b)

32

30
30
30

B

A

Figure 3

## INTERNATIONAL SEARCH REPORT

| International application No. |
|---|
| PCT/JP2019/006378 |

**A. CLASSIFICATION OF SUBJECT MATTER**
Int. Cl. H01M4/525(2010.01)i, C01G53/00(2006.01)i

According to International Patent Classification (IPC) or to both national classification and IPC

**B. FIELDS SEARCHED**

Minimum documentation searched (classification system followed by classification symbols)
Int. Cl. H01M4/525, C01G53/00

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)
Scopus, Science Direct

**C. DOCUMENTS CONSIDERED TO BE RELEVANT**

| Category* | Citation of document, with indication, where appropriate, of the relevant passages | Relevant to claim No. |
|---|---|---|
| X<br>Y | WANG, Z. et al., Hierarchical $LiNi_{0.8}Co_{0.15}Al_{0.05}O_2$ plates with exposed {010} active planes as a high performance cathode material for Li-ion batteries, RSC Advances, 22 March 2016, vol. 6, issue 38, pp. 32365-32369, in particular, fig. 1(c) | 1-3<br>4 |
| Y | WO 2014/103166 A1 (SANYO ELECTRIC CO., LTD.) 03 July 2014, claims, paragraph [0023] & US 2015/0243982 A1, claims, paragraph [0027] & CN 104603996 A | 4 |
| A | JP 2018-14326 A (SAMSUNG SDI CO., LTD.) 25 January 2018, paragraph [0174], fig. 9D & US 2018/0026268 A1, paragraph [0213], fig. 9D & EP 3272710 A1 & KR 10-2018-0010122 A & CN 107644981 A | 1-4 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07.05.2019 | 14.05.2019 |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**INTERNATIONAL SEARCH REPORT**

International application No.

PCT/JP2019/006378

C (Continuation).   DOCUMENTS CONSIDERED TO BE RELEVANT

| Category* | Citation of document, with indication, where appropriate, of the relevant passages | Relevant to claim No. |
|---|---|---|
| A | KR 10-0820057 B1 (SAMSUNG SDI CO., LTD.) 07 April 2008, examples, fig. 3a-3c (Family: none) | 1-4 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5876739 B

- JP 6030546 B